# EUROPÄISCHE PATENTSCHRIFT

(11) **EP 1 260 487 B1**
(45) Veröffentlichungstag und Bekanntmachung des Hinweises auf die Patenterteilung: **31.08.2005**
(21) Anmeldenummer: 01112558.0
(22) Anmeldetag: 23.05.2001
(51) Int. Cl.: C03B 9/36, C03B 9/16

(54) **Blaskopf**
Blowhead
Tête de soufflage

(43) Veröffentlichungstag der Anmeldung: 27.11.2002
(73) Patentinhaber: Heinz-Glas GmbH, 96355 Tettau-Kleintettau (DE)
(72) Erfinder: Stärker, Jens, 96337 Ludwigsstadt (DE)
(74) Vertreter: Zipse + Habersack

(56) Entgegenhaltungen:
- DE-A- 19 713 281
- US-A- 3 871 856

## Beschreibung

Zur Herstellung von Hohlglasartikel werden Blasköpfe verwendet, die auf einen in einer Form befindlichen Glasposten aufgedrückt werden. Nach dem Einleiten von Druckluft wird der Glasposten aufgeblasen und legt sich an die Innenwände der Form an, wodurch das gewünschte Hohlglasprodukt entsteht, z.B. eine Flasche oder ein Flakon. Nach dem Aufblasen wird die Druckluftzufuhr abgeschaltet und die Mantelteile der Form werden entfernt und anschließend der Blaskopf. Nach dem Entfernen der Mantelteile kann es sein, dass das Glasprodukt durch die auf den Blaskopf wirkende Kraft etwas deformiert wird, was zum einen eine gewisse Streuung in der Maßhaltigkeit der hergestellten Formkörper mit sich bringt und andererseits den Ausschuss erhöht.

Die US-A-3,871,856 beschreibt einen Blaskopf, der keine an dem Glsposten anliegende Fläche aufweist. Hier findet zwar keine Deformierung des Produktes durch den Blaskopf statt. Andererseits wird die Formungsmöglichkeit durch den Blaskopf nicht genutzt, was es erfordert, daß das Produkt oben in einem separaten Verfahrensschritt geformt werden muß

Es ist daher Aufgabe der Erfindung, einen Blaskopf zu schaffen, der die Herstellung von sehr maßhaltigen Hohlglasprodukten mit geringem Ausschuss erlaubt.

Diese Aufgabe wird erfindungsgemäß durch einen Blaskopf mit den Merkmalen des Anspruchs 1 gelöst. Vorteilhafte Weiterbildungen der Erfindung sind Gegenstand der Unteransprüche.

Erfindungsgemäß ist der gegen den Glasposten anliegende Teil des Blaskopfes quer zur Anlagefläche oder auch in Blasrichtung beweglich in dem Blaskopf angeordnet. Der Blaskopf wird hierbei durch Druckluft oder ein Druckfluid gegen den Glasposten vorgespannt, solange der Glasposten aufgeblasen wird. Nach dem Fertigblasen wird der Druck vom Druckfluid weggenommen, wodurch der bewegliche Teil nicht mehr unter Spannung gegen den Glasposten anliegt, sondern nur noch spannungslos auf dem zu blasenden Produkt aufliegt. Bei Entfernung der Mantelteile der Blasform gibt es somit keine Deformierung aufgrund des Druckes des Blaskopfes, falls dieser zu spät von dem Produkt entfernt wird. Als Druckfluid wird die Blasdruckluft verwendet, mit der das Hohlglasprodukt aufgeblasen wird. Dies hat den Vorteil, dass die Anpress-Steuerung selbsttätig synchronisiert mit dem Blasvorgang erfolgt und nach dem Wegnehmen des Blasdruckes auch der Anpressdruck des Blaskopfes gegen das Produkt wegfällt.

Auf diese Weise wird somit das noch etwas verformbare geblasene Produkt nicht mehr durch den Druck des Blaskopfes deformiert, was zu einer höheren Maßhaltigkeit der Produkte und zu einer geringeren Ausfallrate der Produkte führt.

In der Regel sind die Blasköpfe symmetrisch, insbesondere rotationssymmetrisch um den Blaskanal ausgebildet. Der gegen den Glasposten anliegende bewegliche Teil des Blaskopfes ist dann vorzugsweise rotationssymmetrisch und axial beweglich um den Blaskanal herum angeordnet. Die dem Glasposten zugewandte Unterseite bzw. Vorderseite des beweglichen Teils bildet die Anlagefläche gegen das Glasprodukt und formt beim Blasvorgang die Oberseite des Mündungsbereichs des Glasproduktes. Vorzugsweise sind die der Druckluftversorgung zugewandten Stirnseiten des axial beweglichen Teils als rotationssymmetrische Ringflächen ausgebildet, die mit dem Blasdruck beaufschlagt und somit gegen den Glasposten vorgespannt werden. Eine derartige Ausbildung des Blaskopfes ist relativ kostengünstig, nämlich durch Drehen herzustellen und führt zu einer gleichmäßigen Krafteinleitung. Die zylindrischen Wände zwischen dem stationären Teil des Blaskopfes und dem beweglichen Teil liegen vorzugsweise im Wesentlichen druckdicht gegeneinander an, oder enthalten eine Dichtung, z.B. O-Ring Dichtung, so dass bei der Vorspannung des beweglichen Teils gegen den Glasposten im Rahmen des Blasvorgangs keine Druckluft an dieser Gleitfläche abfällt. Eine Abdichtung dieser Gleitflächen kann vorzugsweise durch ein abdichtendes Schmiermittel und/oder Dichtungen unterstützt werden.

Vorzugsweise ist der Bewegungspfad des beweglichen Teil des Blaskopfes in Richtung auf den Glasposten durch eine mit dem stationären Teil des Blaskopfes verbundenen Anschlag begrenzt, so dass in Blasstellung eine definierte Position des an dem Glasposten anliegenden beweglichen Teils des Blaskopfes erreicht wird. Dies führt ebenfalls zu einer hohen Maßhaltigkeit der hergestellten Hohlglasprodukte. Die Druckbeaufschlagungsfläche des axial beweglichen Teil des Blaskopfes kann entweder direkt vom Blaskanal aus mit Druck beaufschlagt werden oder über separate Druckluftzuleitungskanäle, die sich schräg vom Blaskanal aus nach unten in Richtung auf die ringförmige Andruckfläche des axial beweglichen Teils des Blaskopfes erstrecken. Auf diese Weise wird eine gleichmäßige Krafteinleitung auf den beweglichen Teil des Blaskopfes erzielt, die das Auftreten von Kippmomenten oder ein Verkanten in der Gleitfläche verhindern.

Die Erfindung wird nachfolgend beispielsweise anhand der schematischen Zeichnung beschrieben. In dieser zeigen:
- Fig. 1: einen Querschnitt durch einen erfindungsgemäßen Blaskopf gemäß der Schnittlinie I-I aus Figur 2 und
- Fig. 2: eine Aufsicht auf den Blaskopf in Richtung des Pfeils II aus Figur 1.

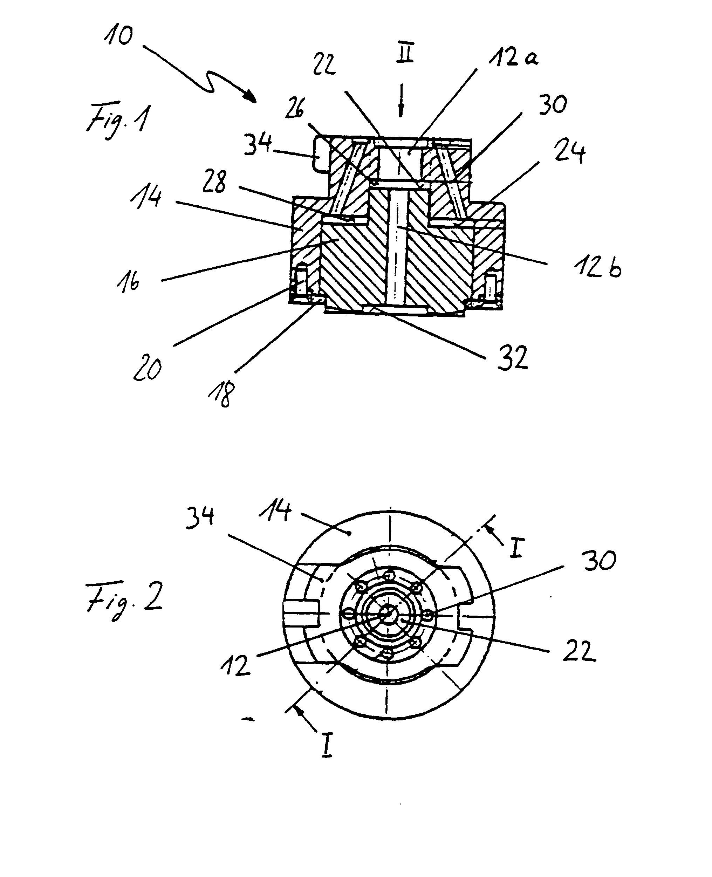

Der Blaskopf 10 wird nachfolgend anhand der Figuren 1 und 2 beschrieben. Der Blaskopf 10 ist rotationssymmetrisch um den Blaskanal 12 aufgebaut und enthält einen äußeren stationären Teil 14, der einen inneren axial entlang des Blaskanals 12 beweglichen Teil 16 zylinderförmig umschließt. Die Bewegung des beweglichen Teils 16 nach vorne in Richtung auf den Glasposten, der in der Zeichnung an der Unterseite des Blaskopfes anzuordnen wäre, ist durch eine ringförmige Anschlagplatte 18 begrenzt, die durch Schrauben 20 mit dem stationären Teil 14 des Blaskopfes 10 verbunden ist. An der der Blasdruckluftzufuhr zugewandten Stirnseite sind zwei Ringflächen 22, 24 ausgebildet, die von zugehörigen Schultern 26, 28 des stationären Teils 14 des Blaskopfes 10 beabstandet sind, so dass in die entstehenden Räume Druckluft von der Blasdruckluftquelle zugeführt werden kann. Während die Zuführung der Druckluft zu der inneren Ringdruckfläche 22 über den Blaskanal 12a im stationären Teil 14 erfolgt, wird die Blasdruckluft der treppenförmig nach unten versetzten äußeren Ringfläche 24 über acht Druckluftleitungen 30 zugeführt, die im 45°-Winkel versetzt um den Blaskanal 12 herum (Fig. 2) angeordnet sind.

An seiner dem Glasposten zugewandten Unterseite hat der axial bewegliche Teil 16 eine Einformung 32, die den oberen Teil der Blasform für die Formung der Einmündung eines Hohlglasproduktes, z.B. einer Flasche oder eines Flakons bildet.

An seinem der Blasvorrichtung zugewandten oberen Ende verfügt der Blaskopf 10 über radial erstreckende Aufnahmenasen 34, mittels deren der Blaskopf in der Herstellungsmaschine festgelegt werden kann.

Die Funktionsweise wird wie folgt erläutert. Ein Glasposten, d.h. eine auf Bearbeitungstemperatur, z.B. 1000°C, befindliche Glasmasse definierter Masse oder Größe wird in eine Blasform überführt. Der Blaskopf wird auf den in der Form befindlichen aufzublasenden Glasposten aufgesetzt und mit Druck beaufschlagt. Durch die Druckbeaufschlagung der Ringflächen 22, 24 wird der axial bewegliche Teil 14 fest gegen den Glasposten gepresst und gleichzeitig über die koaxialen Blaskanäle 12a des stationären Teils 14 und 12b des beweglichen Teils 16 des Blaskopfes 10 Druckluft in den Glasposten eingeblasen, der sich darauf hin an die Wände der Blasform anlegt und zu seiner Endform ausgeblasen wird. Nach dem Blasvorgang wird die Druckluft abgeschaltet, wodurch ebenfalls die Druckvorspannung gegen die Ringflächen 22, 24 wegfällt und der bewegliche Teil 16 des Blaskopfes 10 nur mehr locker auf dem geblasenen Produkt anliegt. Nach Wegnehmen der Mantelformen wird somit kein Druck mehr auf die obere Andruckfläche 32 aufgeführt und dementsprechend das geblasene Hohlglasprodukt nicht verformt oder gar zerstört.

## Patentansprüche

1. Blaskopf zur Herstellung eines Glasprodukts aus einem Glasposten, mit einem gegen einen Glasposten anliegenden Teil (16), welcher Blaskopf (10) zumindest eine Gasdurchführung (12) zur Einleitung von Gas in den Glasposten aufweist, wobei der an dem Glasposten anliegende Teil (16) des Blaskopfes (10) senkrecht zu einer Anlagefläche (32) des Teils (16) beweglich ist und wenigstens eine an der vom Glasposten abgewandten Seite des Teils (16) liegende Druckfläche (22,24) zur Vorspannung des beweglichen Teils (16) gegen den Glasposten aufweist, wobei der Blaskopf derart ausgebildet ist, dass das eingeleitete Gas auch die Druckfläche beaufschlagt.

2. Blaskopf nach Anspruch 1,
der rotationssymmetrisch um einen zentrischen Blaskanal (12) ausgebildet ist, wobei der bewegliche Teil (16) als dem Posten zugewandter axial beweglicher Ringkolben ausgebildet ist, dessen dem Posten abgewandte Stirnseite (22,24) die Druckfläche bildet.

3. Blaskopf nach einem der vorhergehenden Ansprüche,
bei dem zwischen einem stationären Teil (14) des Blaskopfes und dem beweglichen Teil (16) des Blaskopfes ein über Druckkanäle druckbeaufschlagbarer Raum ausgebildet ist.

4. Blaskopf nach einem der vorhergehenden Ansprüche,
der axial einen Blaskanal (12) umschließt, und zwischen einem stationären Teil (14) und dem beweglichen Teil (16) des Blaskopfes wenigstens eine, vorzugsweise senkrecht zur Achse liegende Schulter (22,24) ausgebildet ist, die sich symmetrisch um die Achse erstreckt(en).

5. Blaskopf nach Anspruch 4,
bei dem der stationäre (14) und der bewegliche Teil (16) einander zugewandte in axialer Richtung verlaufende Gleitflächen aufweisen, die im wesentlichen druckdicht abschließen.

6. Blaskopf nach Anspruch 4 oder 5, bei dem die Schulter als koaxial den Blaskanal (12) umgebende Ringfläche (22,24) ausgebildet ist.

7. Blaskopf nach Anspruch 6,
bei dem symmetrisch um den Blaskanal (12) Druckkanäle (30) ausgebildet sind, die sich von dem Blaskanal (12) schräg radial in Blasrichtung nach außen erstrecken und in einem Ringraum zwischen einer Schulter (26,28) des stationären (14) und einer Schulter (22,24) des beweglichen Blaskopfteils (16) einmünden.

8. Blaskopf nach einem der vorhergehenden Ansprüche,
bei dem zwischen dem stationären (14) und beweglichen Teil (16) des Blaskopfes wenigstens eine Anschlagsfläche (18) vorgesehen ist, die die Bewegung des beweglichen Teils (16) in Richtung auf den Posten begrenzt.

9. Blaskopf nach Anspruch 8 und einem der Ansprüche 4 bis 7, bei dem die Anschlagsfläche (18) als lösbar (20) mit dem stationären Teil (14) des Blaskopfes verbindbarer Platte oder Ring ausgebildet ist, die/der den beweglichen Teil (16) radial nach innen übergreift.

10. Blaskopf nach einem der vorhergehenden Ansprüche,
der ein Verbindungsteil (34) zum Einsetzen in eine Herstellungsmaschine für Hohlglas aufweist.

## Claims

1. A blow head for production of a glass product from a gob of glass including a member (16) in contact with the gob, the blow head (10) comprising at least one gas passage (12) for introducing gas into the gob, the member (16) of the blow head (10) in contact with the gob being movable perpendicular to a contact surface (32) of the member (16) and comprising at least one pressurizing surface (22, 24) located on the side of the member (16) facing away from the gob for pressurizing the movable member (16) in contact with the gob, the blow head being configured such that the feed gas also charges the pressurizing surface.

2. The blow head as set forth in claim 1 wherein the blow head is configured rotationally symmetrical about a central blow passage (12), the blow head (10) being configured as an axially movable annular plunger facing the gob, the end (22, 24) of the annular plunger facing away from the gob forming the pressurizing surface.

3. The blow head as set forth in any of the preceding claims wherein configured between a stationary member (14) of the blow head and the movable member (16) of the blow head is a cavity for pressurizing via pressure passageways.

4. The blow head as set forth in any of the preceding claims wherein the blow head axially surrounds a blow passage (12), and at least one shoulder (22, 24) located preferably perpendicular to the center axis is configured between a stationary member (14) and the movable member (16) of the blow head, the shoulder(s) extending symmetrical to the center axis.

5. The blow head as set forth in claim 4 wherein the stationary member (14) and the movable member (16) comprise axially oriented sliding surfaces facing each other providing a substantially pressure-tight seal.

6. The blow head as set forth in claim 4 or 5 wherein the shoulder is configured as an annular surface (22, 24) coaxially surrounding the blow passage (12).

7. The blow head as set forth in claim 6 wherein configured symmetrical about the blow passage (12) are pressure passageways (30) emanating from the blow passage (12) at an angle radially outwards in the blowing direction and porting in an annular cavity between a shoulder (26, 28) of the stationary member (14) and a shoulder (22, 24) of the movable blow head member (16).

8. The blow head as set forth in any of the preceding claims wherein provided between the stationary member (14) and the movable member (16) of the blow head is at least one stopper plate (18) limiting the motion of the movable member (16) in the direction of the gob.

9. The blow head as set forth in claim 8 and any of the claims 4 to 7 wherein the stopper plate (18) is configured as a plate or ring releasably (20) connectable to the stationary member (14) of the blow head, the plate or ring inwardly clasping the movable member (16) radially.

10. The blow head as set forth in any of the preceding claims comprising a connector (34) for inserting in a hollow glassware production machine.

## Revendications

1. Tête de soufflage pour la fabrication d'un produit en verre à partir d'une quantité de verre avec une partie (16) appuyée contre une quantité de verre , laquelle tête de soufflage (10) présente au moins un passage de gaz (12) pour conduire du gaz dans la quantité de verre ; la partie (16) s'appuyant sur la quantité de verre de la tête de soufflage (10) peut être bougée de façon perpendiculaire par rapport à une surface d'appui (32) de la partie (16) et présente au moins une surface de pression (22, 24) se trouvant sur le côté détourné de la quantité de verre de la partie (16) afin de précontraindre la partie (16) mobile contre la quantité de verre ; la tête de soufflage étant formée de manière à ce que le gaz introduit soit appliqué également sur la surface de pression.

2. Tête de soufflage selon la revendication 1, étant formée de façon à tourner de manière symétrique par rapport à un canal de soufflage (12) centré ; la partie (16) mobile étant réalisée en tant que piston annulaire mobile de façon axiale et orienté vers la quantité de verre , le côté frontal (22, 26) dudit piston détourné de la quantité de verre formant la surface de pression.

3. Tête de soufflage selon une des revendications précédentes, dans laquelle on a réalisé un espace susceptible d'être soumis à une pression via des canaux de pression entre une partie stationnaire (14) de la tête de soufflage et la partie mobile (16) de la tête de soufflage.

4. Tête de soufflage selon une des revendications précédentes, comprenant de façon axiale un canal de soufflage (12) et une épaule (22, 24) se trouvant de préférence de façon perpendiculaire par rapport à l'axe étant réalisé entre une partie stationnaire (14) et la partie mobile (16) de la tête de soufflage, laquelle épaule s'étend de façon symétrique autour de l'axe.

5. Tête de soufflage selon la revendication 4, dans laquelle la partie stationnaire (14) et la partie mobile (16) présentent des surfaces de glissement orientées l'une vers l'autre et s'étendant en direction axiale qui sont fermées de façon essentiellement étanche à la pression.

6. Tête de soufflage selon la revendication 4 ou 5 dans laquelle épaule est formée en tant que surface annulaire (22, 24) entourant de façon coaxiale le canal de soufflage (12).

7. Tête de soufflage selon la revendication 6, dans laquelle on a réalisé de façon symétrique autour du canal de soufflage (12), des canaux de pression (30) qui s'étendent vers l'extérieur à partir du canal de soufflage (12) de façon radial en biais dans la direction de soufflage et débouchent dans un espace annulaire entre une épaule (26, 28) de la partie stationnaire (14) et une épaule (22, 24) de la partie de la tête de soufflage (16) mobile.

8. Tête de soufflage selon une des revendications précédentes, dans laquelle on a prévu au moins une surface de butée (18) entre la partie stationnaire (14) et la partie (16) mobile de la tête de soufflage, qui limite le mouvement de la partie (16) mobile en direction de la quantité de verre.

9. Tête de soufflage selon la revendication 8 et une des revendications 4 à 7, dans laquelle la surface de butée (18) est réalisée de façon mobile (20) avec la plaque susceptible d'être reliée avec la partie stationnaire (14) de la tête de soufflage ou de l'anneau, laquelle plaque ou anneau chevauche la partie (6) mobile de façon radiale vers l'intérieur.

10. Tête de soufflage selon une des revendications précédentes, qui présente une partie de liaison (34) destinée à être installée dans une machine de fabrication pour du verre creux.
